# EUROPÄISCHE PATENTSCHRIFT

(11) **EP 0 718 156 B1**
(45) Veröffentlichungstag und Bekanntmachung des Hinweises auf die Patenterteilung: **07.03.2001**
(21) Anmeldenummer: 95119006.5
(22) Anmeldetag: 02.12.1995
(51) Int. Cl.: B60R 16/02

(54) **Verfahren zur Datenübertragung zwischen einem Datenbussystem und einem Lesegerät**
Procedure for data transmission between a data bus and a reader
Procédé de transmission de données entre un bus de données et un lecteur

(30) Priorität: 15.12.1994 DE 4444727
(43) Veröffentlichungstag der Anmeldung: 26.06.1996
(73) Patentinhaber: TEMIC TELEFUNKEN microelectronic GmbH, 90411 Nürnberg (DE)
(72) Erfinder: Jochum, Herbert, D-88263 Horgenzell (DE); Röck, Thomas, D-88069 Tettnang (DE); Wilhelm, Günter, D-88094 Oberteuringen (DE)
(74) Vertreter: Maute, Hans-Jürgen, Dipl.-Ing.

(56) Entgegenhaltungen:
- EP-A- 0 549 541
- DE-C- 4 309 422
- PROCEEDING OF THE INTERNATIONAL CONGRESS ON TRANSPORTATION ELECTRONICS, 15.Oktober 1990, DEARBORN , MI ,USA, Seiten 473-479, XP000223559 CUMMINGS ET AL.: "VEHICLE DIAGNOSTICS - A SYSTEM VIEW"

## Beschreibung

Die Erfindung betrifft ein Verfahren zur Datenübertragung zwischen einem Datenbussystem und einem externen Gerät, wie es aus der EP 0 549 541 A1 bekannt ist.
In einem Datenbussystem können die verschiedenen an den Datenbus (die Busleitungen) angeschlossenen Teilnehmer miteinander kommunizieren und untereinander Daten austauschen. Insbesondere im Kfz-Bereich werden in zunehmenden Maße Datenbussysteme eingesetzt, um die Steuergeräte des Kraftfahrzeugs miteinander zu verknüpfen - beim CAN-Bussystem mit zwei Busleitungen mit zueinander komplementären Logikpegeln werden die Steuergeräte im "low-speed"-Bereich (Datenübertragungsrate max. 125 kBd) angebunden. Um die in den Teilnehmern vorhandenen Daten extern auslesen zu können - insbesondere müssen im Kfz-Bereich zur Durchführung einer Fahrzeugdiagnose die in den Steuergeräten gespeicherten Daten (bsp. Fehlermeldungen der Steuergeräte) ausgelesen werden - ist eine bidirektionale Zugangsmöglichkeit zum Datenbussystem erforderlich: hierzu kann jeder Teilnehmer des Datenbussystems über eine separate Verbindungsleitung mit einer als Steckkontakt ausgebildeten mechanischen Schnittstelle verbunden werden, an die der Steckeranschluß eines externen Lesegeräts angeschlossen werden kann; bei einem Kfz-Datenbussystem sind die Steuergeräte üblicherweise über jeweils eine separate Verbindungsleitung mit einer im Kraftfahrzeug (bsp. im Motorraum) angebrachten Steckerbuchse verbunden, an die der Datenstecker eines externen Diagnosegeräts angeschlossen werden kann.
Nachteilig hierbei ist jedoch, daß
- das Datenbussystem zur Kommunikation mit dem externen Lesegerät eine separate mechanische Schnittstelle und eine Vielzahl von Verbindungsleitungen (Kabel) benötigt, was mit einem erhöhten Platzbedarf und Kostenaufwand verbunden ist,
- die Schnittstelle des Datenbussystems für die Kommunikation mit dem externen Lesegerät frei zugänglich sein muß, was oftmals nicht auf einfache Weise realisierbar ist; eine Datenübertragung ist demzufolge nicht zu jeder Zeit möglich und auch nicht ausreichend vor Manipulationsversuchen geschützt,
- die mechanische Schnittstelle des Datenbussystems nicht potentialfrei ist, und daher eine Beschädigung durch Fremdspannungseinspeisung vorkommen kann.

In der gattungsbildenden EP 0 549 541 A1 wird ein Verfahren zum Ansteuern von Teilnehmern eines Datenbussystems mittels einer Fernbedienungseinheit beschrieben, d.h. die Datenübertragung zur Steuerung der elektronische Komponenten oder elektrische Systeme und Apparaturen des Kraftfahrzeugs erfolgt unidirektional von der Fernbedienungseinheit (vom externen Gerät) zum Empfänger des Datenbussystems.

Der Erfindung liegt die Aufgabe zugrunde, ein Verfahren zur Datenübertragung zwischen einem Datenbussystem und einem externen Gerät anzugeben, das auf einfache Weise eine Erweiterung der Datenübertragung und Funktionsweise ermöglicht. Diese Aufgabe wird gemäß der Erfindung durch die Merkmale des Patentanspruchs 1 gelöst.
Vorteilhafte Weiterbildungen der Erfindung sind Bestandteil der weiteren Patentansprüche.

Beim vorgestellten Verfahren wird die Datenübertragung auf einer leitungslosen Übertragungsstrecke zwischen dem Datenbussystem und dem externen Lesegerät mittels einer in das Datenbussystem eingebundenen übertragungseinheit des Datenbussystems als Schnittstelle des Datenbussystems und einer übertragungseinheit des externen Lesegeräts vorgenommen; hierzu weist sowohl die Übertragungseinheit des externen Lesegeräts als auch die übertragungseinheit des Datenbussystems eine Sendeeinheit und eine Empfangseinheit auf, über die die Kommunikation der Teilnehmer des Datenbussystems mit dem externen Lesegerät bidirektional und leitungslos erfolgt. Die Datenübertragung kann bsp. im Infrarot(IR)-Bereich oder im Hochfrequenz(HF)-Bereich mittels geeigneter Sendeeinheiten und Empfangseinheiten vorgenommen werden, die entsprechende Sendeelemente, Empfangselemente und Steuereinheiten aufweisen; bsp. können im IR-Bereich IR-Sendedioden als Sendeelemente der Sendeeinheiten, IR-Empfangsdioden als Empfangselemente der Empfangseinheiten und bei einem Kraftfahrzeug die Dachbedieneinheit als Steuereinheit eingesetzt werden.

Das Verfahren zur Datenübertragung vereinigt mehrere Vorteile in sich:
- da die übertragungseinheit des Datenbussystems quasi als weiterer Teilnehmer ohne zusätzlichen Bedarf an Verbindungsleitungen in das Datenbussystem eingebunden wird, kann es bei bestehenden Datenbussystemen ohne grundlegende Änderungen in der hardwaremäßigen Konfiguration eingesetzt werden,
- es werden keine separaten mechanischen Schnittstellen (Steckkontakte) und zusätzliche Verbindungsleitungen (Kabel) beim Datenbussystem und keine separaten Anschlußstecker beim externen Lesegerät benötigt, so daß der Platzbedarf und der Kostenaufwand reduziert wird,
- die Datenübertragung kann mittels verschleißfreier Übertragungseinheiten vorgenommen werden, wodurch die Sicherheit der Datenübertragung erhöht wird,
- die Übertragungseinheit des Datenbussystems ist auf einfache Weise zugänglich und steht zu jeder Zeit für die Kommunikation mit dem externen Lesegerät zur Verfügung (im Kraftfahrzeug bsp. auch bei geschlossenem Kraftfahrzeug oder auch während der Fahrt),
- die Datenübertragung kann über größere Entfernungen durchgeführt werden, ohne daß ein unmittelbarer mechanischer Kontakt zwischen dem externen Lesegerät und dem Datenbussystem vorhanden sein muß,
- es wird eine potentialfreie Datenübertragung zwischen dem Datenbussystem und dem externen Lesegerät ohne Gefahr einer Fremdspannungseinspeisung ermöglicht.

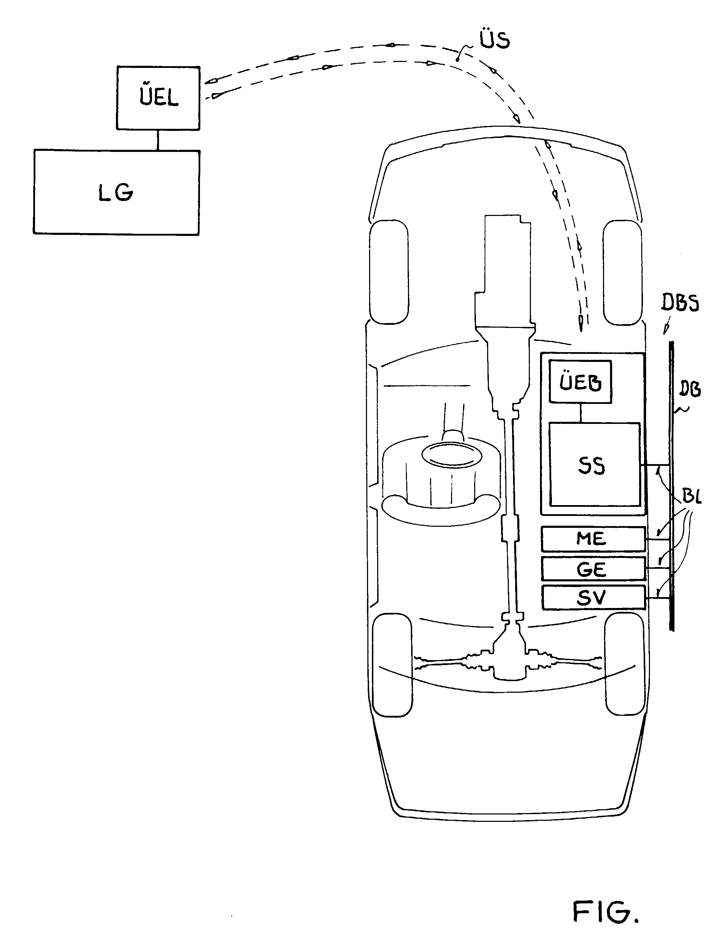

Weiterhin soll das Verfahren zur Datenübertragung anhand der Zeichnung näher beschrieben werden; die Figur zeigt dabei schematisch die Komponenten des in einem Kraftfahrzeug eingesetzten Datenbussystems und des externen Lesegeräts.
Gemäß der Figur sind die Steuergeräte Motorelektronik ME, Getriebeelektronik GE und Sitzverstellung SV des Kraftfahrzeugs als Teilnehmer des Datenbussystems DBS über die Busleitungen BL des Datenbusses DB bidirektional miteinander verbunden. Die Übertragungseinheit ÜEB des Datenbussystems DBS ist bsp. mit dem Steuergerät Schließsystem SS verbunden bzw. in dieses Steuergerät Schließsvstem SS integriert; hierdurch wird die Möglichkeit zur Kommunikation mit den Steuergeräten ME, GE, SV, SS des Kraftfahrzeugs (das Auslesen der Steuergeräte) mit der Zugangsberechtigung zum Kraftfahrzeug verknüpft, so daß Manipulationsversuchen wirksam vorgebeugt wird. Das externe Lesegerät LG ist als Diagnosegerät zur Durchführung einer Fahrzeugdiagnose bsp. als Werkstatt-Rechner oder Handdiagnosegerät ("hand-held-tester") ausgebildet und weist eine der der Übertragungseinheit ÜEB des Datenbussystems DBS entsprechende Übertragungseinheit ÜEL auf. Zur leitungslosen bidirektionalen Datenübertragung auf der übertragungsstrecke ÜS zwischen dem Diagnosegerät LG und dem Datenbussystem DBS (den Steuergeräten ME, GE, SV, SS des Kraftfahrzeugs) weisen die Übertragungseinheiten ÜEL bzw. ÜEB von Diagnosegerät LG und Datenbussystem DBS eine IR-Sendeeinheit mit 6 IR-Sendedioden als Sendeelemente, eine IR-Empfangseinheit mit 3 IR-Empfangsdioden als Empfangselemente, und eine Steuereinheit/Auswerteeinheit zur Steuerung und Auswertung der Datenübertragung auf. Die Steuergeräte ME, GE, SV, SS des Kraftfahrzeugs können somit auf einfache Art und Weise und über eine größere Entfernung, bsp. bereits bei der Einfahrt des Kraftfahrzeugs in die Werkstatt, ohne Öffnen des Kraftfahrzeugs ausgelesen werden. Des weiteren ist ein Auslesen der Steuergeräte ME, GE, SV, SS des Kraftfahrzeugs mittels geeigneter Diagnosegeräte jederzeit möglich, d.h. auch während der Fahrt des Kraftfahrzeugs.

## Patentansprüche

1. Verfahren zur Datenübertragung zwischen einem Datenbussvstem (DBS) und einem externen Gerät (LG), bei dem die Teilnehmer (ME, GE, SV, SS) des Datenbussystems (DBS) über einen aus mindestens einer Busleitung (BL) bestehenden Datenbus (DB) miteinander kommunizieren,
dadurch gekennzeichnet, daß die Datenübertragung zwischen dem Datenbussystem (DBS) und einem externen Lesegerät (LG) bidirektional und leitungslos auf einer Übertragungsstrecke (ÜS) zwischen einer an den Datenbus (DB) angeschlossenen übertragungseinheit (ÜEB) des Datenbussystems (DBS) und einer mit dem externen Lesegerät (LG) verbundenen Übertragungseinheit (ÜEL) erfolgt.

2. Verfahren nach Anspruch 1, dadurch gekennzeichnet, daß die leitungslose Datenübertragung mittels Datenübertragungseinheiten (ÜEB, ÜEL) aus Sendeeinheit, Empfangseinheit und Steuereinheit vorgenommen wird.

3. Verfahren nach Anspruch 1 oder 2, dadurch gekennzeichnet, daß die Datenübertragung im IR-Bereich vorgenommen wird.

4. Verfahren nach Anspruch 1 oder 2, dadurch gekennzeichnet, daß die Datenübertragung im HF-Bereich vorgenommen wird.

5. Verfahren nach einem der Ansprüche 1 bis 4 zur Datenübertragung zwischen dem, mehrere an einen Datenbus (DB) angeschlossene Steuergeräte (ME, GE, SV, SS) aufweisenden Datenbussystem (DBS) eines Kraftfahrzeugs und einem externen Diagnosegerät (LG).

6. Verfahren nach Anspruch 5, dadurch gekennzeichnet, daß die Übertragungseinheit (ÜEB) des Datenbussystems (DBS) in eines der Steuergeräte (ME, GE, SV, SS) des Kraftfahrzeugs integriert wird.

7. Verfahren nach Anspruch 6, dadurch gekennzeichnet, daß die Übertragungseinheit (ÜEB) des Datenbussystems (DBS) in das Steuergerät Schließsystem (SS) des Kraftfahrzeugs integriert wird.

## Claims

1. Process for transmitting data between a data bus system (DBS) and an external device (LG), in which the users (ME, GE, SV, SS) of the data bus system (DBS) communicate with one another via a data bus (DB) consisting of at least one bus line (BL),
characterised in that the data transmission between the data bus system (DBS) and an external reading device (LG) takes place bidirectionally and wirelessly along a transmission path (ÜS) between a transmission unit (ÜEB), which is connected to the data bus (DB), of the data bus system (DBS) and a transmission unit (ÜEL), which is connected to the external reading device (LG).

2. Process according to Claim 1, characterised in that the wireless data transmission is carried out by means of data transmission units (ÜEB, ÜEL) consisting of a transmitting unit, a receiving unit and a control unit.

3. Process according to Claim 1 or 2, characterised in that the data transmission is carried out in the IR range.

4. Process according to Claim 1 or 2, characterised in that the data transmission is carried out in the HF range.

5. Process according to any one of Claims 1 to 4 for transmitting data between the data bus system (DBS), which comprises a plurality of control devices (ME, GE, SV, SS) connected to a data bus (DB), of a motor vehicle and an external diagnostic device (LG).

6. Process according to Claim 5, characterised in that the transmission unit (ÜEB) of the data bus system (DBS) is integrated into one of the control devices (ME, GE, SV, SS) of the motor vehicle.

7. Process according to Claim 6, characterised in that the transmission unit (ÜEB) of the data bus system (DBS) is integrated into the closing system control device (SS) of the motor vehicle.

## Revendications

1. Procédé de transmission de données entre un système de bus de transmission de données (DBS) et un appareil externe (LG), selon lequel les abonnés (ME, GE, SV, SS) du système de bus de transmission de données (DBS) communiquent entre eux par l'intermédiaire d'un bus de transmission de données (DB) constitué par au moins une ligne de bus (BL),
caractérisé en ce que la transmission de données entre le système de bus de transmission de données (DBS) et un appareil externe de lecture (LG) s'effectue d'une manière bidirectionnelle et sans fil dans une section de transmission (US) entre une unité de transmission (UEB) du système de bus de transmission de données (DBS), raccordée au bus de transmission de données (DB), et une unité de transmission (UEL) reliée à l'appareil externe de lecture (LG).

2. Procédé selon la revendication 1, caractérisé en ce que la transmission de données sans fil est réalisée à l'aide d'une unité de transmission de données (UEB, UEL) constituée par une unité d'émission, une unité de réception et une unité de commande.

3. Procédé selon la revendication 1 ou 2, caractérisé en ce que la transmission de données est réalisée dans le domaine de l'infrarouge.

4. Procédé selon la revendication 1 ou 2, caractérisé en ce que la transmission de données est réalisée dans le domaine des hautes fréquences.

5. Procédé selon l'une des revendications 1 à 4 pour la transmission de données entre le système de bus de transmission de données (DBS) d'un véhicule automobile, qui comporte plusieurs appareils de commande (ME, GE, SV, SS) raccordés à un bus de transmission de données (DB).

6. Procédé selon la revendication 5, caractérisé en ce que l'unité de transmission (UEB) du système de bus de transmission de données (DBS) est intégrée dans l'un des appareils de commande (ME, GE, SV, SS) du véhicule automobile.

7. Procédé selon la revendication 6, caractérisé en ce que l'unité de transmission (UEB) du système de bus de transmission de données (DBS) est intégrée dans le système de fermeture (SS) dans l'appareil de commande formé par le système de fermeture (SS) du véhicule automobile.
